# EUROPÄISCHE PATENTSCHRIFT

(11) **EP 0 379 883 B1**
(45) Veröffentlichungstag und Bekanntmachung des Hinweises auf die Patenterteilung: **22.03.1995**
(21) Anmeldenummer: 90100343.4
(22) Anmeldetag: 09.01.1990
(51) Int. Cl.: B62D 43/04

(54) **Reserveradhalter**
Spare wheel holder
Support de roue de secours

(30) Priorität: 24.01.1989 DE 3901960; 05.12.1989 EP 89122419
(43) Veröffentlichungstag der Anmeldung: 01.08.1990
(73) Patentinhaber: PWP SA, CH-1530 Payerne (CH)
(72) Erfinder: Schäfer, Götz, CH-1530 Payerne (CH)
(74) Vertreter: Rieder, Hans-Joachim, Dr.

(56) Entgegenhaltungen:
- CH-A- 668 234
- DE-A- 2 758 687
- DE-C- 824 144

## Beschreibung

Die Erfindung betrifft einen Reserveradhalter nach den Merkmalen des Oberbegriffes des Anspruches 1.

Mittels eines solchen Reserveradhalters kann ein Reserverad eines Lastkraftwagens oder eines anderen Nutzfahrzeuges, oder eines Anhängers eines solchen Nutzfahrzeuges, seitlich von unten am rückwärtigen Teil oder am mittleren Teil des Chassis zwischen den Achsen gehaltert werden. Der dort befindliche Rahmen kann so optimal ausgenutzt werden.

Im einzelnen besitzt ein solcher Reserveradhalter zwei Tragarme, die zwei um 90° umgebogene Befestigungsschenkel besitzen. An diesen Befestigungsschenkeln sind Gelenkstellen ausgebildet, mittels welcher die Tragarme schwenkbar an dem Chassis befestigt sind. Der Reserveradhalter besitzt eine weitere Befestigungsstelle, und zwar an einem sich etwa senkrecht zu den Befestigungsschenkeln erstreckenden Bereich, mittels welcher er lösbar an dem Chassis angebracht ist. Die Tragarme sind im wesentlichen V-förmig angeordnet und untereinander durch einen Querträger verbunden. Derartige Reserveradhalter sind bspw. aus der DE-A-27 58 687 und CH-A-668 234 bekanntgeworden.

Wenn auch ein Reserveradhalter in der vorbeschriebenen Art sich im Grundsatz durchaus bewährt hat, wird in bestimmter Hinsicht noch eine Verbesserungsmöglichkeit gesehen. Bei dem bekannten Reserveradhalter ist der Querträger, der die Tragarme miteinander verbindet, jeweils an den Tragarmen angeschweißt. Im gewöhnlichen Betrieb und über eine gewöhnliche Nutzungsdauer stellt dies eine zuverlässige Konstruktion dar. Bei erhöhter Beanspruchung oder verlängerter Nutzungsdauer ist jedoch nicht auszuschließen, daß sich aufgrund der im rauhen Fahrbetrieb ergebenden Beanspruchungen, wie gefunden wurde, im Bereich oder benachbart zu den Schweißnähten Schadstellen einstellen können, etwa in Form von Rissen, die die Festigkeit der Konstruktion herabsetzen. Gleiches ist im Bereich der vorderen Befestigungsstelle, an welcher der Reserveradhalter lösbar an dem Chassis befestigt ist, zu befürchten. Bei dem bekannten Reserveradhalter (vgl. hierzu insbesondere CH-PS 668 234) ist eine schwenkbare Befestigungslasche vorgesehen, die über einer Bolzenschraube an einem Verbindungsstück angelenkt ist, an welchem Verbindungsstück wiederum die Enden der Tragarme angeschweißt sind. Auch hier ist es der Bereich der Schweißnähte, welcher Ausgangspunkt für eine Festigkeitsminderung sein kann.

Im Hinblick auf den vorbeschriebenen Stand der Technik stellt sich der Erfindung die Aufgabe, den bekannten Reserveradhalter so zu verbessern, daß ein erhöhter Gebrauchswert gegeben ist, insbesondere eine längere Haltbarkeit auch unter erschwerten Bedingungen, bei konstruktiv möglichst einfacher Ausführung.

Diese Aufgabe ist bei der im Anspruch 1 bzw. Anspruch 2 angegebenen Erfindung gelöst.

Die Verbindung mit dem Tragarm ist bei einem reinen Formschluß realisiert, wobei hier vorteilhaft von der V-förmigen Anordnung der Tragarme Gebrauch gemacht werden kann. Durch die starre Verbindung der Verbindungselemente mittels des Querträgers kann sich die Distanz zwischen den Verbindungselementen nicht ändern. Aufgrund der V-förmigen Anordnung der Tragarme können daher die Verbindungselemente aber auch auf dem Tragarm nicht wandern. Die Halterung ist so beschaffen, daß keine wesentliche Vorspannung auf die Tragarme einwirkt. Es wird also zum einen als Verbindungselement ein Rohrstück benutzt, das etwa einen Innendurchmesser aufweist, der dem Außendurchmesser des Tragarmes entspricht. Weiter bevorzugt ist sogar vorgesehen, daß zwischen dem Tragarm und den Verbindungselementen ein Spiel gegeben ist. Bspw. kann ein Verbindungselement ein Rohrstück mit Außendurchmesser 60,3 mm und Wandstärke 4 mm sein und können die Tragarme aus Rohrstücken von 48,3 mm Außendurchmesser und 3,6 mm Wandstärke gebildet sein. Die feste Verbindung des Querträgers mit dem Verbindungselement kann durch Schweißen gegeben sein. Überraschenderweise hat sich nämlich herausgestellt, daß eine solche Schweißnaht, die den Querträger lediglich mit dem lose auf den Tragarmen gehalterten Verbindungselementen verbindet, äußerst dauerfest ist. Die Dauerfestigkeit ist wesentlich erhöht gegenüber einem unmittelbaren Anschweißen der Querträger an den Tragarmen. In diesem Zusammenhang ist gefunden worden, daß durch die erfindungsgemäße Konstruktion Mikroschwingungen, die während des Fahrbetriebes in dem Reserveradhalter auftreten, wesentlich besser aufgenommen werden können und hinsichtlich der Verbindung Querträger/Tragarme praktisch nunmehr unschädlich sind. Ein Verbindungselement kann nach dem weiteren Lösungsgedanken aus einer im Querschnitt U-förmigen Rohrschelle bestehen. Die U-Schenkel werden zur Halterung an einem Tragarm mit Bolzenschrauben durchsetzt. Wenn innenwandig zwischen die U-Schenkel ein Distanzstück eingesetzt wird, können die U-Schenkel auch bei einer festen Vorspannung gegeneinander, wozu bevorzugt als Verbindungselement anstatt einer Bolzenschraube eine Schraube verwendet wird, die U-Schenkel nicht so weit gegeneinander angezogen werden, daß eine eine wesentliche Spannung ausübende Klemmhalterung an dem Tragarm auftritt.

In weiterer Ausgestaltung sind bevorzugt mindestens zwei Bolzen- bzw. Langschrauben vorgesehen. Hierzu ist bevorzugt ein einzelnes Distanzstück vorgesehen, das mindestens zwei, in Längsrichtung des Tragarmes distanzierte und quer zur Längsrichtung des Tragarmes verlaufende Führungsausnehmungen für die Bolzenschrauben bzw. Schrauben aufweist. Dieses Distanzstück kann weiter so gestaltet sein, daß die Führungsausnehmungen im Querschnitt U-förmig und nach unten geöffnet sind. Darüber hinaus kann das Distanzstück einen oberen, in Längsrichtung des Tragarmes verlaufenden und die Führungsausnehmungen verbindenden Stützrücken besitzen, der im montierten Zustand als Auflage für den Tragarm dienen kann. Insgesamt kann das Distanzstück mit den vorbeschriebenen Ausbildungen beispielsweise als Gußstück hergestellt sein. Bezüglich des Stützrückens kann auch noch vorgesehen sein, daß dieser im Querschnitt schalenförmig, nach oben geöffnet ausgebildet ist. Alternativ zu dem vorbeschriebenen Distanzstück können aber auch einzelne, jeweils den einzelnen Bolzenschrauben bzw. Schrauben zugeordnete Distanzstücke vorgesehen sein. Diese können beispielsweise aus Abschnitten von Vierkantrohren gebildet sein. Hinsichtlich der angesprochenen Dauerfestigkeitsproblematik bei der vorderen Laschenverbindung schlägt die Erfindung weiterhin vor, daß zur lösbaren Befestigung der Tragarme an dem Chassis eine Befestigungslasche mittels eines den Tragarm übergreifenden, an der Befestigungslasche lösbar befestigten Halterungsbügelmit diesem verbunden ist. Auch dieser Halte-rungsbügel umfaßt bevorzugt den Tragarm ohne Vorspannung bzw. mit einem soichen Spiel, daß Mikroschwingungen nicht auf die Befestigungspunkte übertragen werden. Der Halterungsbügel kann mit der Befestigungslasche in bevorzugter Ausgestaltung schraubverbunden sein. Weiter ist bevorzugt vorgesehen, daß die Befestigungslasche an dem Tragarm in einem vorderen, enggekrümmten Verbindungsbereich der V-Anordnung schwenkbar angelenkt ist. Hierzu ist in weiterer Ausgestaltung bevorzugt auch vorgesehen, daß die Tragarmanordnung einstückig aus einem gebogenen Rohr gebildet ist. Verbindungspunkte zwischen Tragarmen in dem vorderen Bereich, an welchem die Befestigungslasche angelenkt ist, und die Ausgangsstellen für Schadstellen sein können, kommen in Wegfall. Der zuletzt beschriebenen Ausgestaltung der Anlenkung der Verbindungslasche an den Tragarmen bzw. dem Tragarm kommt insbesondere auch kombinative Bedeutung zu mit der zunächst beschriebenen Ausgestaltung der Befestigung des Querträgers an den Tragarmen. Durch die Verwirklichung beider Maßnahmen kann der Reserveradhalter insgesamt in überraschend einfacher Weise hinsichtlich seiner Dauerfestigkeit entscheidend verbessert werden.

Um den Reserveradhalter gebrauchsgünstiger auszubilden, schlägt die Erfindung in weiterer Ausgestaltung auch vor, daß ein verschwenkbar an einem Tragarm befestigbares Einstellelement vorgesehen ist. Ein solches Einstellelement ermöglicht es, bei unveränderten Tragarmen auch Reifen unterschiedlicher Größe sicher in dem Reserveradhalter befestigen zu können. Das Einstellelement erlaubt eine individuelle Anpassung an unterschiedlich große Reifen. Im Grundsatz ist hierfür ein im wesentlichen einseitig bezüglich eines Tragarmes (im Querschnitt gesehen) auskragendes Teil vorgesehen, das in seinem Grundriß im wesentlichen kreisförmig oder bevorzugt ellipsenartig ausgebildet ist. Durch eine verschwenkbare Anbringung an einem Tragarm kann das Einstellelement unterschiedlich weit in den Halterungsbereich für den Reservereifen geschwenkt werden, je nach Größe des Reservereifens. Weiter bevorzugt ist, daß das Einstellelement klauenartig ausgebildet ist. Im einzelnen können zwei Klauenarme vorgesehen sein, die mittels einer Schraubverbindung an einem Tragarm festsetzbar sind. Die Klauenöffnung umfaßt hierbei den Tragarm. Durch die formschlüssige Befestigbarkeit des Einstellelementes, durch eine Durchmesseränderung der Klauenöffnung, ist auch in diesem Zusammenhang keine Beeinträchtigung der dauerfesten Konstruktion gegeben. Die Klauenarme sind bevorzugt mittels einer Schraubverbindung an einem Tragarm festsetzbar. Hierbei ist die Schraube in dem in den Halterungsbereich für den Reservereifen hineinragenden Teil des Einstellelementes angeordnet.

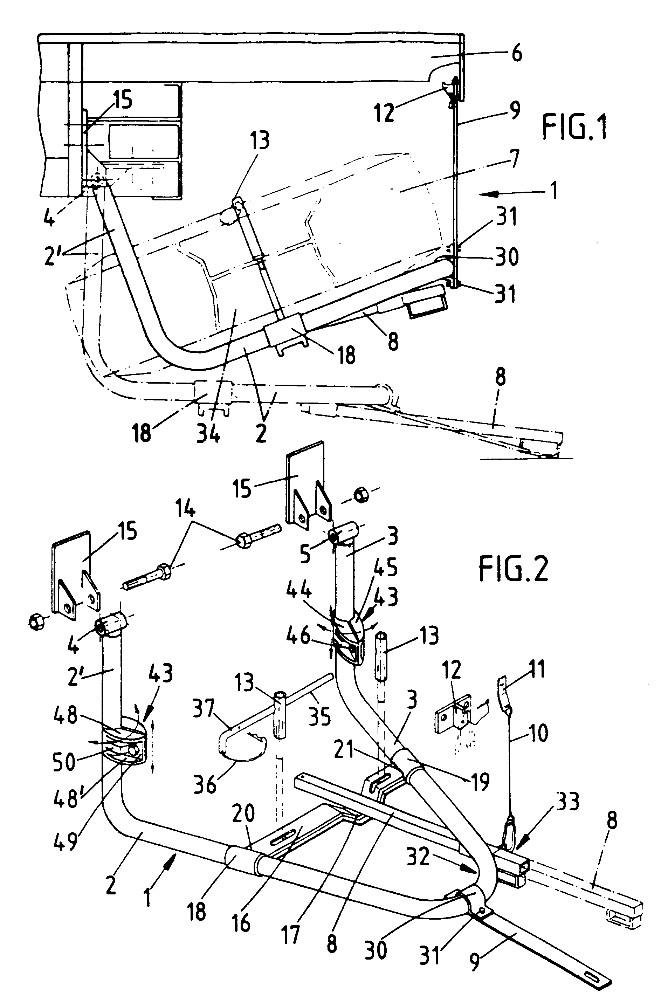

Nachstehend ist die Erfindung noch weiter im einzelnen anhand der beigefügten Zeichnung, die jedoch lediglich Ausführungsbeispiele darstellt, erläutert. Hierbei zeigt:
- Fig. 1: eine schematische Seitenansicht eines Reserveradhalters, wobei strichpunktiert ein Reserverad mit Felge sowie die Öffnungsstellung des Reserveradhalters dargestellt ist;
- Fig. 2: eine perspektivische Explosionsdarstellung des Reserveradhalters;
- Fig. 3: eine perspektivische Darstellung des Reserveradhalter-Kopfteils;

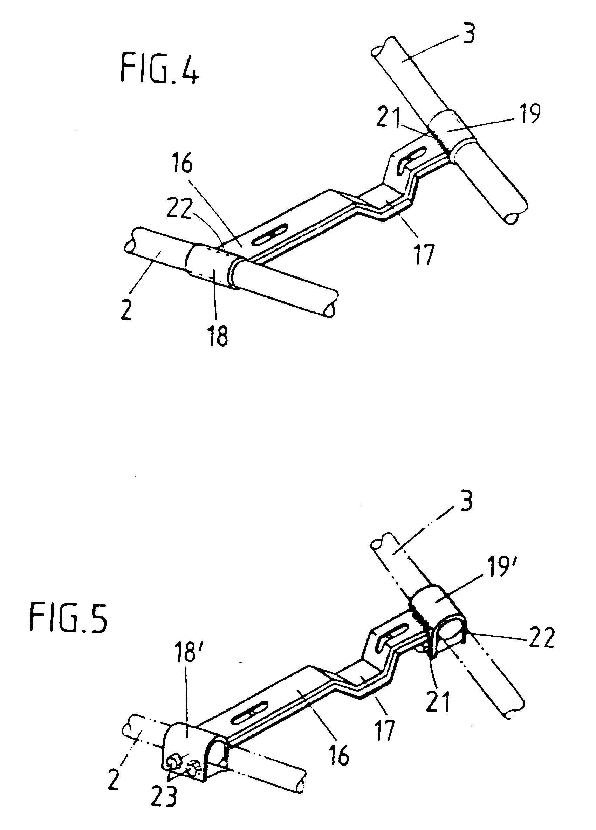

- Fig. 4: eine perspektivische Darstellung der Verbindung Querträger/Tragarme;
- Fig. 5: eine Darstellung gemäß Fig. 4 in alternativer Ausgestaltung;
- Fig. 6: eine Detaildarstellung der Verbindung Querträger/Tragarm;
- Fig. 7: einen Schnitt durch Fig. 6 entlang der Linie VII-VII;
- Fig. 8: eine Darstellung gemäß Fig. 7, in einer alternativen Ausführungsform;
- Fig. 9: eine perspektivische Darstellung eines Distanzstückes;
- Fig. 10: eine Seitenansicht der Ausgestaltung gemäß Fig. 8;
- Fig. 11: eine perspektivische Ansicht eines Einstellelementes;
- Fig. 12: einen Querschnitt durch ein an einem Tragarm befestigtes Einstellelement;
- Fig. 13: eine Seitenansicht der Anordnung gemäß Fig.12; und
- Fig. 14 und 15: eine Verdeutlichung der Einstellbarkeit mittels Einstellelementen gemäß Fig. 11
Dargestellt und beschrieben ist ein Reserveradhalter 1, der aus einem zwei Tragarme 2,3 aufweisenden, gebogenen Rohrstück besteht. Die Tragarme 2,3 besitzen jeweils einen um etwa 90° umgebogenen Befestigungsschenkel 2′ bzw. 3′, an welchen Gelenkstellen 4,5 ausgebildet sind zur schwenkbaren Befestigung des Reserveradhalters 1 an einem Chassis 6 eines Lastkraftwagens. Bevorzugt ist der Reserveradhalter 1, wie in Fig. 1 dargestellt, in seitlicher Ausrichtung an dem Chassis 6 angebracht, so daß im heruntergeklappten Zustand, wie in Fig. 1 strichpunktiert angedeutet, zu dem Reserverad 7 von der Seite her und von vorn ein Zugang gegeben ist.

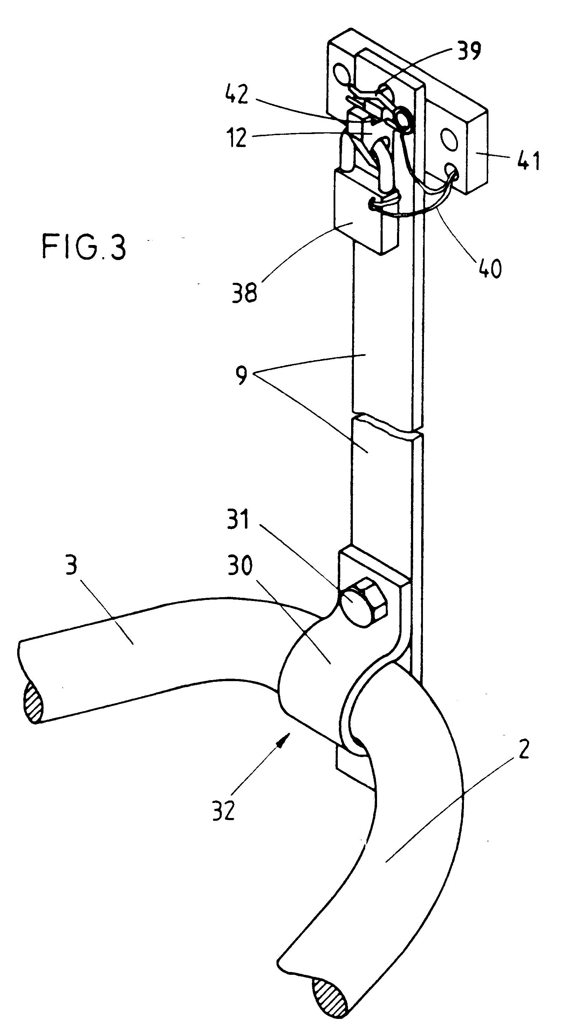

Der Reserveradhalter 1 besitzt desweiteren einen Hebel 8, der auf der unteren Seite eines Tragarmes 3 befestigt ist. Zum Herablassen des Reserveradhalters 1 wird dieser Hebel 8 herausgezogen, wie in Fig. 1 angedeutet. Beim Wiederbefestigen des Reserveradhalters 1 kann der Reserveradhalter 1 mittels des Hebels 8 hochgehoben werden und sodann die Befestigungslasche 9 an einem chassisfesten Haken 12 befestigt werden. Sodann wird der Hebel 8, wie gleichfalls aus Fig. 1 ersichtlich, wieder eingeschoben. Im eingeschobenen Zustand ist der Hebel 8 über eine Sicherung 33 gefesselt. Im einzelnen ist die Befestigungslasche 9, wie aus Fig. 3 ersichtlich, an dem Haken 12 noch mittels eines Vorhängeschlosses 38 und einem Federstecker 39 weiter gesichert. Beide Elemente sind über eine Schnur 40 an der Befestigungsplatte 41 angebunden, so daß sie bei einem Lösen des Reserveradhalters 1 auch nicht verlorengehen können. Der Haken 12 besitzt noch eine Einkerbung 42, die größer ist als der Durchmesser der Lasche 9. Sollte die Federklemme 39 einmal versagen oder versehentlich nicht eingesetzt sein oder gar auch das Vorhängeschloß 38 fehlen, kann die Lasche 9 dennoch in der Aussparung 42 gehalten werden. Die Sicherung 33 ist mittels eines gesonderten Seiles 10 am Chassis gesondert befestigt. Dieses Seil dient auch als zweite Sicherung neben der Lasche 9. Eine Lasche 10 kann hierzu über eine Öse 11 ebenfalls mit der chassisfesten Aufhängung, sprich Haken 12, verbunden werden.

Weiter weist der Reserveradhalter 1 zwei Schraubelemente 13 auf, zur Sicherung der Felge 34 des des Reserverades 7 in dem Reserveradhalter 1. Die Schraubelemente 13 können ihrerseits durch eine beide Elemente 13 durchsetzende Stange 35 gesichert werden. Ein einendig an der Stange 35 angebrachter Nylonfaden 36 kann zur weiteren Sicherung verwendet werden. Nach Einschieben der Stange 35 befindet sich ein Loch 37 jenseits des in der Zeichnung ersten Schraubelementes 13. Durch Befestigen des Nylonfadens 36 (der auch aus einem anderen Material bestehen kann) an der Stange 35 mittels des Loches 37 ist die Stange dann an dem ersten Schraubelement 13 gesichert.

Von Bedeutung ist, daß die Felge an dem Reserveradhalter 1 in der beschriebenen Weise sicherbar ist. Wenn beispielsweise ein Reifenschaden aufgetreten ist und die Lauffläche sich gelöst hat, kann auch ein derart beschädigter Reifen sicher mittels der Felgenhalterung in dem Reserveradhalter 1 gehaltert werden.

Die Schraubelemente 13 sowie die Stange 35 können gleichzeitig auch als Arbeitshilfe dienen können. Die Gelenkstellen 4 und 5 bestehen aus Lageraugen, die mittels Bolzenschrauben 14 an Lagerelementen 15 schwenkbar befestigbar sind. Im angehobenen Zustand, wie in Fig. 1 dargestellt, bilden die Tragarme 2,3 eine um ca. 30° abfallende Ebene. In Gefällerichtung dieser Ebene schließen sich die Befestigungsschenkel 2′,3′ an. Hierdurch wird das Reserverad 7 formschlüssig gehandhabt. Die größte Öffnung zwischen den Tragarmen 2,3 bzw. den Befestigungsschenkeln 2′,3′ ist kleiner als der Durchmesser des Reserverades 7. Nach vorn wird das Reserverad 7 durch die Befestigungslasche 9 gehaltert. Dabei ist auch der Abstand zwischen den Befestigungsschenkeln 2′,3′ und der Befestigungslasche 9 jeweils kleiner als der Durchmesser des Reserverades 7. Im eingebauten Zustand kann das Reserverad 7 also auch seitlich nicht ohne Lösung der gesamten Halterung entnommen werden.

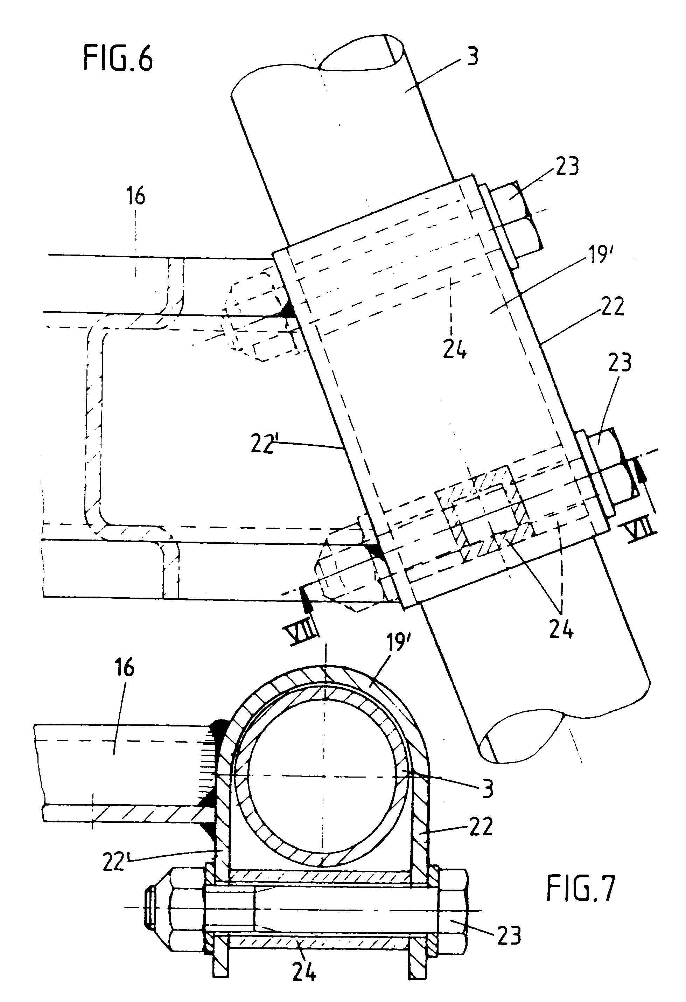

Die Tragarme 2,3 sind durch einen Querträger 16 miteinander verbunden, der auch eine Auskragung 17 besitzt, in welcher der erwähnte Hebel 8 geführt ist. Dieser Querträger 16 ist an den Tragarmen 2,3 durch Verbindungselemente 18,19 lose formschlüssig gehaltert. Zunächst können diese Verbindungselemente 18,19 aus einfachen Rohrstücken bestehen, die einen größeren Innendurchmesser aufweisen als der Außendurchmesser der Tragarme 2,3, die bevorzugt gleichfalls aus Rohren gebildet sind. Die Verbindungselemente 18,19 sind über Schweißnähte 20,21 mit dem Querträger 16 verbunden. Gemäß einer alternativen Ausgestaltung können die Verbindungselemente 18′,19′ aus einer im Querschnitt U-förmigen Rohrschelle bestehen (vergl. auch Fig. 5), die durch die Schenkel 22,22′ der Rohrschelle 18′ bzw. 19′ durchsetzende Bolzenschrauben 23 unter Zwischenschaltung eines Distanzstückes 24 an dem Tragarm 2 bzw. 3 gesichert sind. Bevorzugt sind zwei Bolzenschrauben 23 nebeneinander vorgesehen (vergl. Fig. 6). Die Distanzstücke 24 können etwa Abschnitte von Vierkantrohren sein.

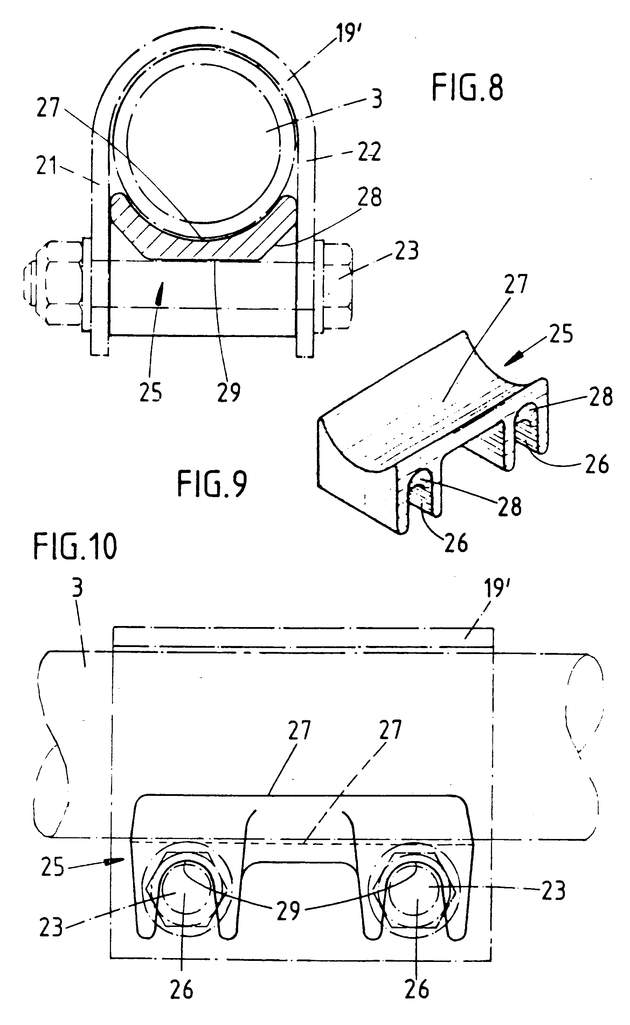

In einer weiteren alternativen Ausgestaltung (vergl. Fig. 8-10) ist ein einteiliges Distanzstück 25 für beide Bolzenschrauben 23 vorgesehen. Das Distanzstück 25 besitzt zwei in Längsrichtung des Tragarmes 2 bzw. 3 distanzierte, quer zur Längserstreckung des Tragarmes 2 bzw. 3 verlaufende Führungsausnehmungen 26 für die Bolzenschrauben 23. Die Führungsausnehmungen 26 sind im Querschnitt U-förmig, wie sich etwa aus Fig. 10 ergibt. Darüber hinaus besitzt das Distanzstück 25 einen oberen, in Längsrichtung des Tragarmes 2 bzw. 3 verlaufenden Stützrücken 27, der die Führungsausnehmungen 26 verbindet. Der Stützrücken 27 ist im Querschnitt schalenförmig geformt, wie sich beispielsweise gemäß Fig. 8 ergibt. Die Führungsausnehmungen 26 besitzen Einlaufschrägen 28, die gewölbeartig auf eine innere Deckenausbildung 29 hinführen, die im Querschnitt gerade verläuft, wie etwa aus Fig. 8 ersichtlich. An dieser Deckenausbildung 29 kommen die Bolzenschrauben 23 im Einbauzustand in Anlage. Die Distanzstücke 24,25 verhindern, daß die Schenkel 22′,22 der Verbindungselemente 18,19,18′,19′ im Einbauzustand zu weit gegeneinander angezogen werden, so daß etwa ein Anliegen an den Tragarmen 2,3 unter Vorspannung gegeben wäre.

Aus den Fig. 1-3 ist desweiteren noch die Verbindung der Tragarme 2,3 mit der lösbaren Befestigungslasche 9 ersichtlich. Hierzu ist an der Befestigungslasche 9 ein den Tragarm 2 bzw. 3 übergreifender und an der Befestigungslasche 9 lösbar befestigter Halterungsbügel 30 vorgesehen. Der Halterungsbügel 30 ist mittels zweier Schraubverbindungen 31 an der Befestigungslasche 9 angebracht. Der Halterungsbügel 30 umfaßt den Tragarm 2 bzw. 3 mit einem gewissen Spiel, so daß die Befestigungslasche 9 zum einen leicht um den Tragarm 2 bzw. 3 schwenkbar ist und zum anderen etwa auftretende Mikroschwingungen in den Tragarmen 2,3 nicht auf die Befestigungspunkte, d. h. Schraubverbindungen 31 übertragen werden. Desgleichen werden aber auch etwa in der Befestigungslasche 9 auftretende Mikroschwingungen nicht oder nur in begrenztem Maße auf die Tragarme 2 bzw. 3 übertragen. Die Befestigungslasche 9 ist mittels des Halterungsbügels 30 an einer Krümmung 32 des bzw. der Tragarme 2,3 angebracht, die zugleich auch ein seitliches Spiel des Halterungsbügels 30 sehr begrenzt. Die beschriebene Ausgestaltung ermöglicht auch eine einstückige Ausbildung der Tragarme 2,3 durch eine einstückig gebogene Rohrkonstruktion.

In Fig. 2 sind weiterhin Einstellelemente 43 dargestellt, die es ermöglichen, in dem Reserveradhalter 1 auch in einfacher Weise Reifen unterschiedlichen Durchmessers sicher zu halten.

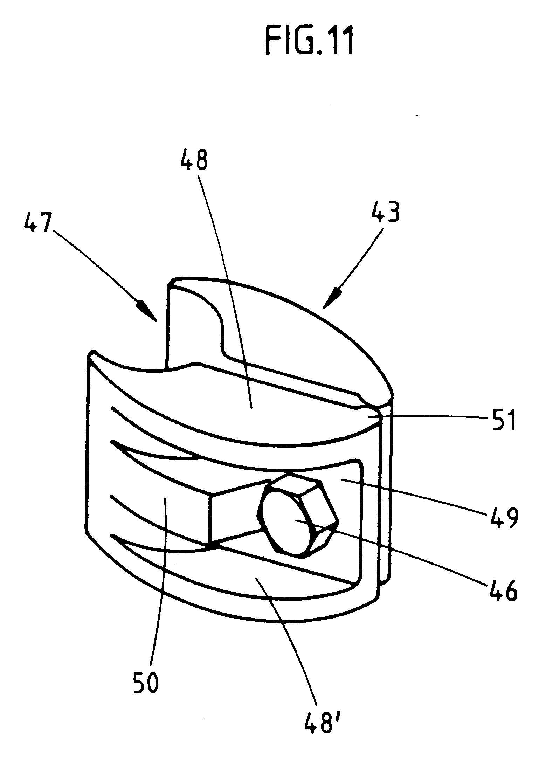

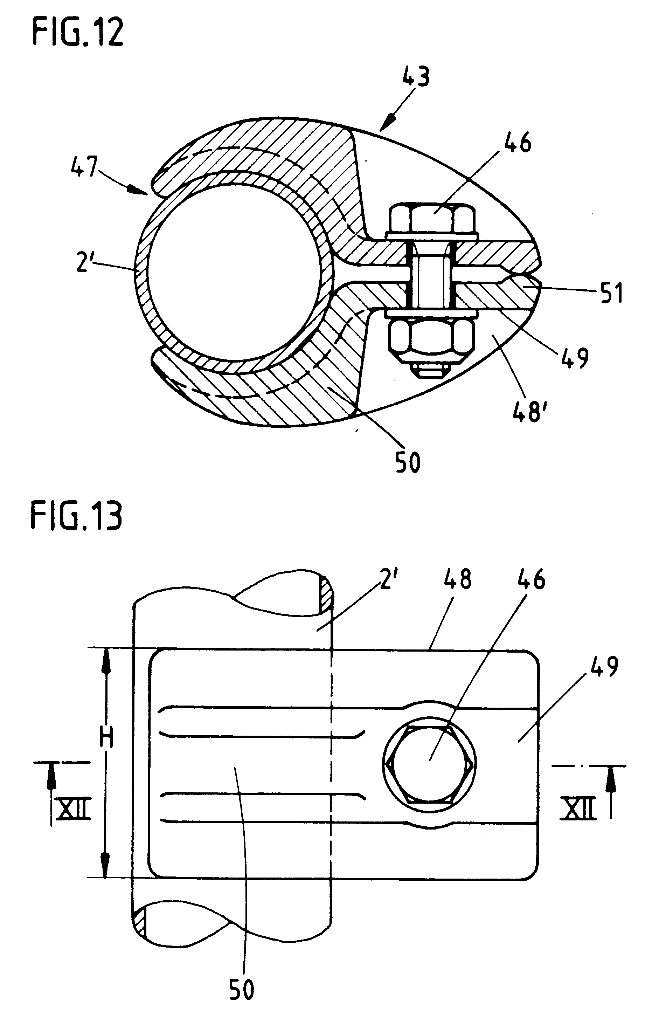

Die Einstellelemente 43, bevorzugt sind zwei solcher Einstellelemente vorgesehen, die an den Befestigungsschenkeln 2′ bzw. 3′ angebracht sind, bestehen im einzelnen aus zwei Klauenarmen 44 und 45, die durch eine Schraubverbindung 46 miteinander verbunden sind. Mittels der Klauenöffnung 47 (vergl. auch Fig. 11) ist im Befestigungszustand ein Befestigungsschenkel 2′ bzw. 3′ umklammert. Die Klauenöffnung 47 (vergl. hierzu auch Fig. 12) umschließt etwa über einen Winkel von 270° einen Befestigungsschenkel 2′ bzw. 3′. Bei zwei Klauenschenkeln 44, 45 umschließt also jeder Schenkel etwa 130°.

In der Draufsicht gemäß Fig. 12 ergibt sich für ein Einstellelement 43 ein im wesentlichen ellipsenartiger Grundriß. Dieser ellipsenartige Grundriß ist zum Teil durchgängig von den Klauenschenkeln 44, 45 ausgefüllt, nämlich im Bereich der Klauenöffnung 47. Zum Teil sind jedoch nur obere und untere Schenkeldecken 48, 48′ vorgesehen, die sich im wesentlichn rechtwinklig zu einem Schenkelabschnitt 49 erstrecken. Im Bereich des Schenkelabschnittes 49 sind zwei einander zugeordnete Klauenarme 44, 45 mittels der Schraubverbindung 46 miteinander schraubverbunden. Zwischen den Schenkeldecken 48, 48′ ist eine teilweise ausgebildete Zwischendecke 50 vorgesehen, welche in ihrer Außenkontur gleichfalls wie die beiden Schenkeldecken 48 und 48′ dem Grundriß des Einstellelementes 43 folgt, jedoch vor der im vorderen, enggekrümmten Bereich des Einstellelementes 6 angeordneten Schraubverbindung 46 über einen im wesentlichen rechtwinkligen Abfall endet und in den Schenkelbereich 49 einläuft.

Wesentlich ist weiter, daß an den vorderen Spitzenbereichen, im enggekrümmten Bereich des Grundrisses an den Schenkelbereichen 49 aufeinander zugerichtete Stoß-Ausformungen 51 ausgebildet sind. Hierdurch wird erreicht, daß die Klauenarme 44, 45 durch die Schraubverbindung 46 federnd gegeneinander verspannt werden können.

Ein Einstellelement 43 besitzt eine Höhe H von etwa 5 - 6 cm, bevorzugt ca. 5 1/2 cm, und, gerechnet von einem Mittelpunkt eines Befestigungsschenkels 2′ bzw. 3′ (im Einbauzustand) eine längste Erstreckung von ca. 7 - 8 cm, bevorzugt etwa 7 1/2 cm, bei einem größten Durchmesser von gleichfalls etwa 7 1/2 cm. Es versteht sich, daß diese Maße auch an unterschiedliche Einsatzbedingungen angepaßt werden können.

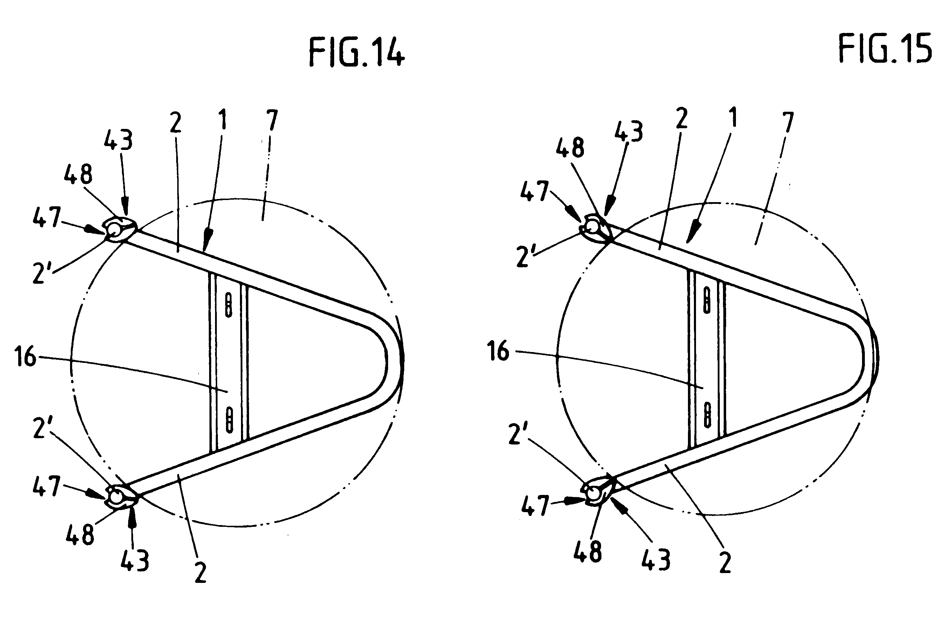

Die Fig. 14 und 15 veranschaulichen die durch die Einstellelemente 43 gegebenen Möglichkeiten. In Fig. 14 ist ein relativ großer Reservereifen 7 in dem Reserveradhalter aufgenommen, während bei der Darstellung gemäß Fig. 15 ein relativ kleiner Reservereifen. 7 in dem Reserveradhalter 1 aufgenommen ist. Ein Einstellelement 43 ist bei der Darstellung in Fig. 15 gegenüber der Darstellung in Fig. 14 um etwa 30° gegen den Uhrzeigersinn (unteres Einstellelement 43) bzw. im Uhrzeigersinn (oberes Einstellelement 43 in der Zeichnung) verschwenkt worden. Während der Reservereifen 7 in der Darstellung gemäß Fig. 14 im wesentlichen durch eine breitseitige Anlage an einem Einstellelement 43 abgestützt und gehaltert ist, wirkt auf den Reservereifen 7 bei der Darstellung gemäß Fig. 15 der vordere enggekrümmte Bereich des Einstellelementes 43 auf denselben ein.

## Patentansprüche

1. Reserveradhalter (1) zur Anbringung an einem LKW-Chassis (6) in bevorzugt seitlicher Ausrichtung, mit Tragarmen (2, 3), die an etwa um 90° umgebogenen Befestigungsschenkeln (2', 3') ausgebildeten Gelenkstellen (4, 5) schwenkbar und an einer weiteren Befestigungsstelle, an einem sich etwa senkrecht zu den Befestigungsschenkeln (2', 3') erstreckenden Bereich, lösbar an dem Chassis (6) angebracht sind, wobei die V-förmig angeordneten Tragarme (2, 3) untereinander durch einen Querträger (16) verbunden sind, dadurch gekennzeichnet, daß der Querträger (16) beidendig mit jeweils einem einen Tragarm (2, 3) formschlüssig umfassenden Verbindungselement (18, 19) fest verbunden ist, das als ein auf den Tragarm (2, 3) aufgeschobenes Rohrstück ausgebildet ist.

2. Reseveradhalter nach den Merkmalen des Oberbegriffes des Anspruches 1, dadurch gekennzeichnet, daß der Querträger (16) beidendig jeweils mit einem Verbindungselement (18, 19) fest verbunden ist und daß das Verbindungselement (18, 19) eine im Querschnitt U-förmige Rohrschelle ist, die durch die Schenkel (21, 22) durchsetzende Bolzenschrauben (23) an dem Tragarm (2, 3) sicherbar ist.

3. Reserveradhalter nach Anspruch 1 oder 2, dadurch gekennzeichnet, daß ein Verbindungselement (18, 19) auf einen Tragarm (2, 3) spannungsfrei aufgeschoben ist.

4. Reserveradhalter nach Anspruch 2, dadurch gekennzeichnet, daß die Rohrschelle unter Zwischenschaltung eines Distanzstückes (24, 25) an dem Tragrm (2, 3) sicherbar ist.

5. Reserveradhalter nach Anspruch 1 oder 2, dadurch gekennzeichnet, daß der Querträger (16) mit dem Verbindungselement (18, 19) verschweißt ist.

6. Reserveradhalter nach einem der Ansprüche 1 bis 5, wobei zwei Bolzenschrauben (23) vorgesehen sind, dadurch gekennzeichnet, daß ein Distanzstück (24, 25 ) mit mindestens zwei, in Längsrichtung des Tragarmes (2, 3) distanzierten, quer zur Längserstreckung verlaufenden Führungsausnehmungen (26) für die Bolzenschrauben (23) ausgebildet ist.

7. Reserveradhalter nach Anspruch 6, dadurch gekennzeichnet, daß die Führungsausnehmungen (26) im Querschnitt U-förmig und nach unten geöffnet sind.

8. Reseveradhalter nach den Ansprüchen 6 und 7, dadurch gekennzeichnet, daß das Distanzstück (24, 25) einen oberen, in Längsrichtung des Tragarmes (2, 3) verlaufenden und die Führungsausnehmungen (26) verbindenden Stützrücken (27) ausbildet.

9. Reseveradhalter nach Anspruch 8, dadurch gekennzeichnet, daß der Stützrücken (27) im Querschnitt schalenförmig nach oben geöffnet ausgebildet ist.

10. Reserveradhalter nach einem der Ansprüche 1 bis 9, dadurch gekennzeichnet, daß zur lösbaren Befestigung der Tragarme (2, 3) an dem Chassis (6) eine Befestigungslasche (9) mittels eines den Tragarm (2, 3) übergreifenden, an der Befestigungslasche (9) lösbar befestigten Halterungsbügels (30) mit diesem verbunden ist.

11. Reserveradhalter nach Anspruch 10, dadurch gekennzeichnet, daß der Halterungsbügel (30) mit der Befestigungslasche (9) schraubverbunden ist.

12. Reserveradhalter nach einem der Ansprüche 10 und 11, dadurch gekennzeichnet, daß die Befestigungslasche (9) an dem Tragarm (2, 3) in einem vorderen, enggekrümmten Verbindungsbereich (Krümmung 32) der V-Anordnung schwenkbar angelenkt ist.

13. Reserveradhalter nach einem oder mehreren der vorhergehenden Ansprüche, dadurch gekennzeichnet, daß die Tragarm-Anordnung einstückig ausgebildet ist.

14. Reserveradhalter nach einem oder mehreren der vorhergehenden Ansprüche, dadurch gekennzeichnet, daß zwei Schraubelemente (13) vorgesehen sind, zur Sicherung der Felge (34) eines Reserverades (7) in dem Reserveradhalter (1).

15. Reserveradhalter nach Anspruch 14, dadurch gekennzeichnet, daß die Schraubelemente (13) durch eine beide Elemente (13) durchsetzende Stange (35) sicherbar sind.

16. Reserveradhalter nach einem oder mehreren der vorhergegehenden Ansprüche, gekennzeichnet durch ein verschwenkbar an einen Tragar, (2, 3) befestigbares Einstellelement (42).

17. Reserveradhalter nach Anspruch 16, dadurch gekennzeichnet, daß das Einstellelement (42) klauenartig ausgebildet ist.

18. Reseveradhalter nach Anspruch 16, oder 17, dadurch gekennzeichnet, daß zwei Klauenarme (44, 45) vorgesehen sind, die mittels einer Schraubverbindung (46) an einem Tragarm (2, 3) festsetzbar sind.

19. Reserveradhalter nach einem der Ansprüche 16 bis 18, dadurch gekennzeichnet, daß das Einstellelement (43) einen ellipsenartigen Grundriß aufweist.

20. Reserveradhalter nach einem der Ansprüche 16 bis 19, dadurch gekennzeichnet, daß zwei Einstellelemente (43) jeweils an einem Befetigungsschenkel (2', 3')angebracht sind.

## Claims

1. Spare wheel holder (1) for mounting on a lorry chassis (6) in preferably lateral alignment, with carrying arms (2, 3) which are pivotable at joints (4, 5) formed on fixing arms (2', 3') bent round at about 90° and which are mounted releasably on the chassis (6) at another fixing point, in a region extending more or less perpendicularly to the fixing arms (2', 3'), wherein the carrying arms (2, 3) arranged in a V-shape are connected to each other by a cross beam (16), characterised in that the cross beam (16) is rigidly connected at either end to a connecting element (18, 19) which encompasses a carrying arm (2, 3) in formlocking relationship and which is constructed as a pipe section fitted over the carrying arm (2, 3).

2. Spare wheel holder according to the characteristics of the introductory part of claim 1, characterised in that the cross beam (16) is rigidly connected at either end to a connecting element (18, 19) and in that the connecting element (18, 19) is a pipe clamp of U-shaped cross-section which can be secured to the carrying arm (2, 3) by bolts (23) passing through the arms of the U (21, 22).

3. Spare wheel holder according to claim 1 or 2, characterised in that a connecting element (18, 19) is fitted without stress over a carrying arm (2, 3).

4. Spare wheel holder according to claim 2, characterised in that the pipe clamp can be secured to the carrying arm (2, 3) with the interposition of a distance piece (24, 25).

5. Spare wheel holder according to claim 1 or 2, characterised in that the cross beam (16) is welded to the connecting element (18, 19).

6. Spare wheel holder according to any of claims 1 to 5, wherein two bolts (23) are provided, characterised in that a distance piece (24, 25) is constructed with at least two guide recesses (26) for the bolts (23), which are spaced apart in the longitudinal direction of the carrying arm (2, 3) and extend transversely to the longitudinal extent.

7. Spare wheel holder according to claim 6, characterised in that the guide recesses (26) are of U-shaped cross-section and open at the bottom.

8. Spare wheel holder according to claims 6 and 7, characterised in that the distance piece (24, 25) forms an upper supporting spine (27) extending in the longitudinal direction of the carrying arm (2, 3) and connecting the guide recesses (26).

9. Spare wheel holder according to claim 8, characterised in that the supporting spine (27) has a dish-shaped cross-section open at the top.

10. Spare wheel holder according to any of claims 1 to 9, characterised in that, for releasable fixing of the carrying arms (2, 3) to the chassis (6), a fixing strap (9) is connected thereto by means of a stirrup-shaped mounting (30) engaging over the carrying arm (2, 3) and releasably fixed to the fixing strap (9).

11. Spare wheel holder according to claim 10, characterised in that the stirrup-shaped mounting (30) is bolted to the fixing strap (9).

12. Spare wheel holder according to either of claims 10 and 11, characterised in that the fixing strap (9) is pivotably linked to the carrying arm (2, 3) in a front, tightly curved connecting zone (curvature 32) of the V-assembly.

13. Spare wheel holder according to one or more of the preceding claims, characterised in that the carrying arm assembly is constructed in one piece.

14. Spare wheel holder according to one or more of the preceding claims, characterised in that two screw elements (13) are provided, for securing the rim (34) of a spare wheel (7) in the spare wheel holder (1).

15. Spare wheel holder according to claim 14, characterised in that the screw elements (13) can be secured by a rod (35) passing through both elements (13).

16. Spare wheel holder according to one or more of the preceding claims, characterised by an adjusting element (42) which can be pivotably fixed to a carrying arm (2, 3).

17. Spare wheel holder according to claim 16, characterised in that the adjusting element (42) is of claw-like construction.

18. Spare wheel holder according to claim 16 or 17, characterised in that two claw arms (44, 45) are provided, which can be fixed to a carrying arm (2, 3) by means of a screw connection (46).

19. Spare wheel holder according to any of claims 16 to 18, characterised in that the adjusting element (43) has an elliptical contour.

20. Spare wheel holder according to any of claims 16 to 19, characterised in that two adjusting elements (43) are mounted in each case on a fixing arm (2', 3').

## Revendications

1. Support de roue de secours (1) destiné à être monté sur un châssis de véhicule industriel lourd (6), de préférence latéralement, muni de bras de support (2, 3) qui sont montés amovibles sur le châssis pivotant en des emplacements de pivotement (4, 5) formés sur des branches de fixation (2', 3') cintrées approximativement à 90° et en un autre emplacement de fixation, dans une zone s'étendant de façon presque perpendiculaire aux branches de fixation (2', 3'), les bras de support (2, 3) disposés en forme de V étant reliés l'un à l'autre par un bras de support (16), caractérisé en ce que le bras de support (16) est relié rigidement à chacune de ses deux extrémités par un élément de liaison (18, 19) entourant avec conjugaison de forme un bras de support (2, 3), l'élément de support étant constitué par une pièce tubulaire montée par coulissement sur le bras de support (2, 3).

2. Support de roue de secours selon les caractéristiques du préambule de la revendication 1, caractérisé en ce que le support transversal (16) est relié rigidement à chacune de ses deux extrémités à un élément de liaison (18, 19) et en ce que l'élément de liaison (18, 19) est constitué par un collier tubulaire à section transversale en forme de U, qui est susceptible d'être fixé au bras de support (2, 3) par des boulons à vis (23) traversant les branches (21, 22).

3. Support de roue de secours selon la revendication 1 ou 2, caractérisé en ce qu'un élément de liaison (18, 19) est monté par coulissement sans serrage sur un bras de support (2, 3).

4. Support de roue de secours selon la revendication 2, caractérisé en ce que le collier tubulaire est susceptible d'être fixé sur le bras de support (2, 3) avec interposition d'une pièce d'entretoisement.

5. Support de roue de secours selon la revendication 1 ou 2, caractérisé en ce que le support transversal (16) est soudé a l'élément de liaison (18, 19).

6. Support de roue de secours selon l'une des revendications 1 à 5, dans lequel sont prévus deux boulons à vis (23), caractérisé en ce qu'une pièce d'entretoisement (24, 25) comporte au moins deux cavités de guidage (26) disposées dans la direction longitudinale du bras de support (2, 3) à distance l'une de l'autre, transversalement à la direction longitudinale, pour les boulons à vis (23).

7. Support de roue de secours selon la revendication 6, caractérisé en ce que les cavités de guidage (26) présentent une section transversale en forme de U et sont ouvertes vers le bas.

8. Support de roue de secours selon les revendications 6 et 7, caractérisé en ce que la pièce d'entretoisement (24, 25) comporte un dos d'appui supérieur (27) courant dans la direction longitudinale du bras de support et reliant les cavités de guidage (26).

9. Support de roue de secours selon la revendication 8, caractérisé en ce que le dos d'appui (27) présente une section transversale en forme de coquille et ouverte vers le haut.

10. Support de roue de secours selon l'une des revendications 1 à 9, caractérisé en ce que pour la fixation amovible du bras de support (2, 3) sur le châssis (6) une patte de fixation (9) est reliée au bras de support à l'aide d'un étrier de fixation (30) entourant le bras de support et fixé de façon amovible à la patte de fixation (9).

11. Support de roue de secours selon la revendication 10, caractérisé en ce que l'étrier de fixation (30) est relié par vis à la patte de fixation (9).

12. Support de roue de secours selon l'une des revendications 10 et 11, caractérisé en ce que la patte de fixation (9) peut pivoter autour du bras de support (2, 3) et est articulé dans une zone de liaison avant (courbure 32), à faible rayon de courbure de l'agencement en V.

13. Support de roue de secours selon l'une ou plusieurs des revendications précédentes, caractérisé en ce que l'agencement de bras de support est monobloc.

14. Support de roue de secours selon l'une ou plusieurs des revendications précédentes, caractérisé en ce qu'il est prévu deux éléments filetés (13) pour fixer la jante (34) d'une roue de secours (7) dans le support de roue de secours (1).

15. Support de roue selon la revendication 14, caractérisé en ce que les éléments filetés (13) sont fixables au moyen d'une barre (35) traversant les deux éléments (13).

16. Support de roue de secours selon l'une ou plusieurs des revendications précédentes, caractérisé par un élément de réglage pivotant (42) susceptible d'être fixé sur un support (2, 3).

17. Support de roue de secours selon la revendication 16, caractérisé en ce que l'élément de réglage (42) est réalisé en forme de pince.

18. Support de roue de secours selon la revendication 16 ou 17, caractérisé en ce qu'il est prévu deux bras formant pince (44, 45) qui sont susceptibles d'être fixés rigidement à un bras de support (2, 3) par une liaison à vis (46).

19. Support de roue de secours selon l'une des revendications 16 à 18, caractérisé en ce que l'élément de réglage (43) présente un contour extérieur elliptique.

20. Support de roue de secours selon l'une des revendications 16 à 19, caractérisé en ce que deux éléments de réglage (43) sont fixés chacun à une branche de fixation (2', 3').
